(19) Europäisches Patentamt
European Patent Office
Office européen des brevets

(11) **EP 3 341 500 B1**

(12) **EUROPÄISCHE PATENTSCHRIFT**

(45) Veröffentlichungstag und Bekanntmachung des Hinweises auf die Patenterteilung:
**25.12.2019   Patentblatt 2019/52**

(21) Anmeldenummer: **16759732.7**

(22) Anmeldetag: **29.08.2016**

(51) Int Cl.:
***C21D 8/12*** *(2006.01)*

(86) Internationale Anmeldenummer:
**PCT/EP2016/070316**

(87) Internationale Veröffentlichungsnummer:
**WO 2017/037019 (09.03.2017 Gazette 2017/10)**

(54) **VERFAHREN ZUM HERSTELLEN EINES KORNORIENTIERTEN ELEKTROBANDS UND KORNORIENTIERTES ELEKTROBAND**

METHOD FOR PRODUCING A GRAIN-ORIENTED ELECTRICAL STEEL STRIP AND GRAIN-ORIENTED ELECTRICAL STEEL STRIP

PROCÉDÉ DE FABRICATION D'UNE TÔLE MAGNÉTIQUE À GRAINS ORIENTÉS ET TÔLE MAGNÉTIQUE À GRAINS ORIENTÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2015   DE 102015114358**

(43) Veröffentlichungstag der Anmeldung:
**04.07.2018   Patentblatt 2018/27**

(73) Patentinhaber: **ThyssenKrupp Electrical Steel GmbH**
**45881 Gelsenkirchen (DE)**

(72) Erfinder:
• **HECHT, Christian**
**45481 Mülheim an der Ruhr (DE)**
• **LAHN, Ludger**
**47447 Moers (DE)**
• **SCHEPERS, Carsten**
**46348 Raesfeld (DE)**

(74) Vertreter: **Cohausz & Florack**
**Patent- & Rechtsanwälte**
**Partnerschaftsgesellschaft mbB**
**Postfach 10 18 30**
**40009 Düsseldorf (DE)**

(56) Entgegenhaltungen:
**JP-A- 2004 191 217     JP-A- 2005 069 917**
**JP-A- 2005 069 930**

• CAROLINA CESCONETTO SILVEIRA ET AL: "The influence of internal oxidation during decarburization of a grain oriented silicon steel on the morphology of the glass film formed at high temperature annealing", JOURNAL OF MAGNETISM AND MAGNETIC MATERIALS, Bd. 358-359, 1. Mai 2014 (2014-05-01), Seiten 65-69, XP055328789, AMSTERDAM, NL ISSN: 0304-8853, DOI: 10.1016/j.jmmm.2014.01.019
• DARREN POULTNEY ET AL: "Evaluation of oxide layers formed during the decarburisation of grain-oriented electrical steel using a Fourier transform infrared (FTIR) technique", JOURNAL OF MAGNETISM AND MAGNETIC MATERIALS, Bd. 320, Nr. 20, 1. Oktober 2008 (2008-10-01), Seiten e645-e648, XP055328786, AMSTERDAM, NL ISSN: 0304-8853, DOI: 10.1016/j.jmmm.2008.04.147
• POULTNEY D ET AL: "Use of the Fourier transform infrared (FTIR) technique for determination of the composition of final phosphate coatings on grain-oriented electrical steel", JOURNAL OF MAGNETISM AND MAGNETIC MATERIALS, ELSEVIER, AMSTERDAM, NL, Bd. 320, Nr. 20, 1. Oktober 2008 (2008-10-01), Seiten e649-e652, XP023905266, ISSN: 0304-8853, DOI: 10.1016/J.JMMM.2008.04.148 [gefunden am 2008-04-29]

**EP 3 341 500 B1**

**Beschreibung**

Die Erfindung betrifft ein Verfahren zum Herstellen eines kornorientierten Elektrobands sowie ein kornorientiertes Elektroband.

Wenn in der vorliegenden Anmeldung von "Elektrobändern" die Rede ist, sind damit durch Walzen von geeignet zusammengesetzten Stählen erzeugte Elektrobleche und Elektrobänder sowie daraus abgeteilte Platinen oder Zuschnitte gemeint, die für die Herstellung von Teilen für elektrotechnische Anwendungen vorgesehen sind.

Kornorientierte Elektrobänder der hier in Rede stehenden Art eignen sich dabei insbesondere für Verwendungen, bei denen ein besonders niedriger Ummagnetisierungsverlust im Vordergrund steht und hohe Ansprüche an die Permeabilität oder Polarisation gestellt werden. Solche Anforderungen bestehen insbesondere bei Teilen für Leistungstransformatoren, Verteilungstransformatoren und höherwertige Kleintransformatoren.

Wie im Einzelnen beispielsweise in der EP 1 025 268 B1 erläutert, wird im Zuge der Herstellung von Elektrobändern allgemein zunächst ein Stahl, der (in Gew.-%) typischerweise 2,5 bis 4,0 % Si, 0,010 bis 0,100 % C, bis zu 0,150 % Mn, bis zu 0,065 % Al und bis zu 0,0150 % N, sowie jeweils optional 0,010 bis 0,3 % Cu, bis 0,060 % S, bis 0,100 % P, bis jeweils 0,2 % As, Sn, Sb, Te und Bi, Rest Eisen und unvermeidbare Verunreinigungen aufweist, zu einem Vormaterial, wie einer Bramme, Dünnbramme oder einem gegossenen Band, vergossen. Das Vormaterial wird dann erforderlichenfalls einer Glühbehandlung unterzogen und anschließend zu einem Warmband warmgewalzt.

Das erhaltene Warmband wird zu einem Coil gehaspelt und kann anschließend erforderlichenfalls einer Glühung sowie einer ebenso optional absolvierten Entzunderungs- bzw. Beizbehandlung unterzogen werden. Dann wird aus dem Warmband ein- oder mehrstufig ein Kaltband gewalzt, wobei bei einem mehrstufigen, in mehreren Schritten erfolgenden Kaltwalzen zwischen den Kaltwalzschritten erforderlichenfalls eine Zwischenglühung durchgeführt wird.

Das erhaltene Kaltband durchläuft daraufhin üblicherweise eine Entkohlungsglühung, um zur Vermeidung einer magnetischen Alterung den Kohlenstoffgehalt des Kaltbands zu minimieren.

Nach dem Entkohlungsglühen wird auf die Bandoberflächen ein Glühseparator aufgebracht, bei dem es sich typischerweise um MgO handelt. Der Glühseparator verhindert, dass die Windungen eines aus dem Kaltband gewickelten Coils bei einer nachfolgend durchgeführten Hochtemperaturglühung miteinander verschweißen.

Während der Hochtemperaturglühung, die typischerweise in einem Haubenofen unter Schutzgas durchgeführt wird, entsteht im Kaltband durch selektives Kornwachstum eine wesentlich zu den magnetischen Eigenschaften beitragende Gefügetextur.

Gleichzeitig bildet sich während der Hochtemperaturglühung auf den Bandoberflächen eine Forsteritschicht aus, in der Fachliteratur oft auch als "Glasfilm" bezeichnet.

Darüber hinaus wird durch während der Hochtemperaturglühung ablaufende Diffusionsvorgänge das Stahlmaterial gereinigt.

Im Anschluss an die Hochtemperaturglühung wird das so erhaltene, die Forsteritschicht aufweisende Stahlflachprodukt mit einer Isolierschicht beschichtet, thermisch gerichtet und in einer abschließenden "Schlussglühung" spannungsarm geglüht. Diese Schlussglühung kann vor oder nach der Konfektionierung des in der voranstehend beschriebenen Weise erzeugten Stahlflachprodukts zu den für die Weiterverarbeitung benötigten Zuschnitten erfolgen. Durch eine Schlussglühung, die nach dem Abteilen der Zuschnitte durchgeführt wird, können die im Zuge des Abteilvorgangs entstandenen zusätzlichen Spannungen abgebaut werden. So erzeugte Elektrobänder weisen in der Regel eine Dicke von 0,15 mm bis 0,5 mm auf.

Wie in der WO 03/000951 A1 weiter erläutert, gehört es ebenfalls zum Stand der Technik, dass die Domänenstruktur zusätzlich durch das Aufbringen einer Isolationsschicht verbessert werden kann, die auf das Blechsubstrat eine permanente Zugspannung ausübt, und dass des Weiteren auch eine Behandlung, bei der Linien lokaler Spannungen quer oder schräg zur Walzrichtung auf dem Stahlflachprodukt erzeugt werden, die magnetischen Eigenschaften von kornorientierten Elektrobändern weiter verbessert werden können. Derartige Oberflächenstrukturen können beispielsweise durch lokale mechanische Deformationen (EP 0 409 389 A2), Laser- oder Elektronenstrahlbehandlungen (EP 0 008 385 B1; EP 0 100 638 B1; EP 0 571 705 A2) oder Einätzen von Gräben (EP 0 539 236 B1) erzeugt werden.

Beispielsweise aus der EP 0 225 619 B1 ist es darüber hinaus bekannt, dass auch der Forsteritfilm einen wichtigen Einfluss auf wesentliche Gebrauchseigenschaften von Elektrobändern hat. So werden beispielsweise die Verluste, das Geräuschverhalten im Transformator oder auch die Haftfestigkeit der Isolation durch den Forsteritfilm zwischen magnetisch aktivem Grundmaterial und Isolationsschicht beeinflusst.

An den Forsteritfilm werden daher in der Praxis folgende Anforderungen gestellt:

- Er soll die Haftfestigkeit des Isolierfilms am Grundmaterial durch eine optimale Verzahnung mit dem Stahlsubstrat gewährleisten.

- Er soll eine Zugspannung auf das Grundmaterial ausüben, durch die die magnetischen Eigenschaften des Elektrobands wesentlich verbessert werden.

- Er soll eine homogene dunkelgraue Färbung der Oberflächen des Fertigmaterials sicherstellen.

Möglichkeiten, die Wirkung des Forsteritfilms durch chemische Zusätze zu dem vor der Hochtemperaturglühung auf das kaltgewalzte Stahlflachprodukt aufgetragenen Glühseparator zu optimieren, sind beispielsweise in der WO 95/25820 A1 erläutert.

Ebenso ist bekannt, dass die Eigenschaften und Wirkung des Forsteritfilms auch durch die Prozessschritte beeinflusst werden, die das Stahlsubstrat bei der Herstellung von kornorientierten Elektrobändern vor dem Auftrag des Glühseparators absolviert. Ein Indikator ist hierbei die Zusammensetzung der auf dem Stahlsubstrat vor der Haubenglühung vorhandenen Oxidschicht, die beim einer nach Stand der Technik ausgeführten Hochtemperaturglühung mit anschließender Entspannungsglühung sowie optionaler zusätzlich durchgeführter Laserbehandlung zu reproduzierbaren Glasfilmen führt.

Bei der Betrachtung des Zusammenhangs zwischen dem Zustand, den das Stahlsubstrat bei der Erzeugung von kornorientierten Elektrobändern vor dem Auftrag des Glühseparators und der Hochtemperaturglühung aufweist, und den daraus resultierenden Eigenschaften des erhaltenen Forsteritfilms liegt in der Literatur das Hauptaugenmerk typischerweise auf der Verzahnung des Forsterits mit dem Stahlsubstrat, da dadurch die Haftung des in den nachfolgendenden Arbeitsschritten gebildeten Verbunds aus Forsteritfilm und Isolationsbeschichtung wesentlich abhängt.

So ist beispielsweise in der JP 2004/191217 A1 oder JP 2005 069 917 vorgeschlagen worden, zur Verbesserung der Haftfestigkeit der Isolationsschicht die oberste Oxidschicht mittels Untersuchungen auf Grundlage der Fourier-Transform-Infrarotspektrometrie "FTIR" zu optimieren. Hierfür wird ein Infrarot-Strahl unter definiertem Winkel auf die Oberfläche gestrahlt und die gerichtete Reflektion gemessen. Da innerhalb des Materials Mehrfachreflektionen auftreten, kann, abhängig vom Einstrahlungswinkel, nur der oberste Teil der Oxidschicht gemessen werden. Daher lässt dieses Verfahren nur Rückschlüsse über die Haftfestigkeit zu, andere Eigenschaften, wie z.B. die spätere Zugspannung lassen sich hierdurch nicht bestimmen.

Daher wird in der bereits genannten JP 2004/191217 A1 oder in anderen Fachveröffentlichungen, wie beispielsweise im Artikel "Rapid quantitative analysis of fayalite and silica formed during decarburization of electrical steel" von Jung et al., erschienen in Surface Interface Analysis 2012, 44, 270-275 oder im Artikel "Characterization of chemical information and morphology for in-depth oxide layers in decarburized electrical steel with glow discharge sputtering" ebenfalls von Jung et al, erschienen in Surface Interface Analysis 2013, 45, 1119-1128, eine Kombination mit invasiven Techniken, wie z.B. rf-GDOES oder auch Nasschemie, diskutiert. Diese Methoden lassen jedoch keine Aussagen mehr über die molekulare Zusammensetzung der Oxidschicht bzw. der darauf erzeugten Forsteritschicht zu, da durch die Abtragung der Oberfläche die Molekülzusammensetzung gestört wird. Auch bei einer Kombination mit mikroskopischen Verfahren, wie sie im zweiten voranstehend genannten Artikel von Jung et al vorgeschlagen wird, ergeben sich keine Aussagen, mit denen sich die Oxidschicht in einer Weise beschreiben ließe, aus der sich unmittelbare Schlüsse für die praktische Anwendung ziehen ließen.

Vor dem Hintergrund des Standes der Technik ergab sich die Aufgabe, ein Verfahren zur Herstellung von kornorientierten Elektrobändern anzugeben, mit dem sich gezielt die Oberflächenkonstitution des jeweiligen Stahlflachprodukts vor dem Auftrag des Glühseparators so einstellen lässt, dass ein Forsteritfilm mit optimaler Wirkung hinsichtlich der magnetischen Eigenschaften des herzustellenden Elektrobands erhalten wird.

Die Erfindung hat diese Aufgabe dadurch gelöst, dass bei der Herstellung von kornorientierten Elektrobändern nach Maßgabe des in Anspruch 1 angegebenen Verfahrens vorgegangen wird.

Vorteilhafte Ausgestaltungen der Erfindung sind in den abhängigen Ansprüchen angegeben und werden nachfolgend wie der allgemeine Erfindungsgedanke im Einzelnen erläutert.

Gemäß der Erfindung werden bei der Herstellung von kornorientierten Elektrobändern die im Stand der Technik hierzu üblicherweise vorgesehenen Arbeitsschritte durchlaufen. Hierzu zählen

a) Erschmelzen einer Stahlschmelze, die aus (in Gew.%) 2,0 - 4,0 % Si, 0,010 - 0,100 % C, bis zu 0,065 % Al und bis zu 0,020 % N, sowie jeweils optional bis zu 0,5 % Cu, bis zu 0,060 % S und ebenso optional jeweils bis zu 0,3 % Cr, Mn, Ni, Mo, P, As, Sn, Sb, Se, Te, B oder Bi, Rest Eisen und unvermeidbaren Verunreinigungen besteht;

b) Vergießen der Stahlschmelze zu einem Vormaterial, wie einer Bramme, Dünnbramme oder einem gegossenen Band;

c) Warmwalzen des Vormaterials zu einem Warmband;

d) Haspeln des Warmbands zu einem Coil;

e) optionales Glühen des Warmbands;

f) Kaltwalzen des Warmbands in einem oder mehreren Kaltwalzschritten zu einem Kaltband;

g) Oxidations-/Primärrekristallisationsglühen des Kaltbands, wobei dieser Arbeitsschritt optional eine Aufstickbehandlung umfasst und wobei das Kaltband nach dem Oxidations-/Primärrekristallisationsglühen auf seiner Oberfläche eine Oxidschicht aufweist;

h) Auftrag einer Glühseparatorschicht auf die die Oxidschicht aufweisende Oberfläche des Kaltbands;

i) Hochtemperaturglühen des mit dem Glühseparator beschichteten Kaltbands unter Ausbildung einer Forsteritschicht auf der Oberfläche des geglühten Kaltbands;

j) Auftrag einer Isolierschicht auf die die Forsteritschicht aufweisende Oberfläche des Kaltbands;

k) Schlussglühen des Kaltbands.

l) optionales Laserbehandeln des Kaltbands;

Es versteht sich von selbst, dass das erfindungsgemäße Verfahren weitere Arbeitsschritte umfassen kann, die bei der konventionellen Herstellung von Elektrobändern durchgeführt werden, um optimierte magnetische oder für die praktische Verwendung wichtige Eigenschaften zu erzielen. Hierzu zählen beispielsweise eine Wiedererwärmung des nach dem Vergießen des Stahls erhaltenen Vorprodukts, ein Entzundern des Warmbands vor dem Kaltwalzen oder im Fall der mehrstufigen Durchführung des Kaltwalzens ein jeweils zwischen den Kaltwalzstufen in konventioneller Weise durchgeführtes Zwischenglühen.

Entscheidend dafür, dass bei der Herstellung von Elektrobändern eine Oberflächenkonstitution des jeweiligen Stahlflachprodukts vor dem Auftrag des Glühseparators erhalten wird, welche die zuverlässige Entstehung eines Forsteritfilms mit optimaler Wirkung hinsichtlich der magnetischen Eigenschaften des herzustellenden Elektrobands ermöglicht, ist dabei, dass erfindungsgemäß

- nach dem Arbeitsschritt g) mittels diffuser Reflexions-Fourier-Transformations-Infrarot-Spektroskopie ein Spektrum der an der Oberfläche des Kaltbands vorhandenen Oxidschicht erstellt wird,

- für den bei 980 cm$^{-1}$ in dem erhaltenen Spektrum vorhandenen Peak, der die in der Oxidschicht anwesenden $Fe_2SiO_4$-Moleküle, auch "Fayalite-Moleküle" genannt, repräsentiert, die Fläche "Fläche($Fe_2SiO_4$)" durch Integration bestimmt wird,

- für den bei 1250 cm$^{-1}$ in dem erhaltenen Spektrum vorhandenen Peak, der die in der Oxidschicht anwesenden $\alpha SiO_2$-Moleküle repräsentiert, die Fläche "Fläche($\alpha SiO_2$)" durch Integration bestimmt wird

und

- die Zusammensetzung des Stahls (Arbeitsschritt a)) oder die Parameter des optional durchgeführten Warmbandglühens (Arbeitsschritt e)), des Kaltwalzens (Arbeitsschritt f)) oder des Oxidations-/ Primärrekristallisationsglühens (Arbeitsschritt g)) derart eingestellt werden, dass die Fläche($\alpha SiO_2$) und die Fläche($Fe_2SiO_4$) die Bedingung 0,5 x Fläche ($Fe_2SiO_4$) $\leq$ Fläche ($\alpha SiO_2$) $\leq$ 2 x Fläche ($Fe_2SiO_4$) erfüllen.

Die Erfindung geht hier von der Erkenntnis aus, dass einerseits die Haftfestigkeit des Forsteritfilms auf dem Stahlsubstrat nur über die obersten atomaren Lagen der Oxidschicht gesteuert wird, wogegen die auf das Grundmaterial übertragende Spannung nur in gewissen Grenzen modifiziert werden kann. Um jedoch die Zugspannung weiter zu erhöhen, muss beispielsweise bei einem im Wesentlichen aus MgO bestehenden Glühseparator innerhalb des aus dem Glühseparator gebildeten Forsteritfilms die morphologische Anordnung der Mg-Atome in der Matrix der $SiO_4$ Tetraeder verändert werden.

Hierfür ist es nach den Erkenntnissen der Erfindung notwendig, nicht nur die molekulare Zusammensetzung der oberflächennahen Schicht und die atomare Zusammensetzung der Oxidschicht zu kontrollieren, sondern die gesamte Oxidschicht molekular zu charakterisieren und gezielt zu beeinflussen.

Um dies zu gewährleisten, wird erfindungsgemäß die Oxidschicht mittels der sogenannten "diffusen Reflexions-Fourier-Transformations-Infrarot-Spektroskopie", kurz auch als "DRIFT-Verfahren" bezeichnet, charakterisiert. Beim DRIFT-Verfahren wird ein IR-Lichtstrahl mittels Hohlspiegeln auf die Probenfläche gerichtet und das reflektierte Licht auch mittels Hohlspiegeln detektiert (s. Beasley et al., "Comparision of transmission FTIR, ATR and DRIFT sprecta", Journal of Archeological Sience, Vol. 46, June 2014, Seite 16 - 22). Dies ermöglicht die Auswertung von tiefer gelegenen Oxidschichten und damit eine tiefergehende Analyse der Molekül-Anteile in der Oxidschicht. Auf Grundlage des Ergebnisses der DRIFT-Untersuchung werden dann bei der nachfolgenden Verarbeitung der Stahlflachprodukte die Prozessparameter so eingestellt, dass sich eine für die Entstehung eines optimal haftenden und gleichzeitig optimal hohe Zugspannungen ausübenden Forsteritfilms günstige Oxidschicht auf dem Stahlsubstrat bildet.

Die Analyse des DRIFT-Spektrums der auf der Oberfläche des Stahlflachprodukts nach dem Kaltwalzen vorhandenen Oxidschicht sollte kontinuierlich überprüft werden, um einerseits für jede Charge an Elektrobändern die Qualität des Oxidfilms über die gesamte Fläche des betreffenden Stahlflachprodukts zu erfassen. Andererseits erlauben es die erfindungsgemäß aus dem DRIFT-Spektrum abgeleiteten Informationen, die Ergebnisse der Herstellung nachfolgender Chargen von Elektrobändern zu optimieren. Ergibt sich aus dem DRIFT-Spektrum, dass das Verhältnis der Anteile $\alpha$-$SiO_2$- und Fayalit ($Fe_2SiO_4$) - Molekülen nicht den erfindungsgemäßen Vorgaben entspricht, werden hierzu die bis zum Auftrag des Glühseparators durchlaufenen Prozessschritte des erfindungsgemäßen Verfahrens angepasst. D.h., es werden die Stahlanalyse, die Parameter der Warmbandglühung, die Parameter des Kaltwalzens und die Parameter des Oxidations-/Primärrekristallisationsglühens so eingestellt, dass die erfindungsgemäß an die sich im DRIFT-Spektrum darstellenden Molekül-Anteile gestellte Bedingung

$0,5 \times$ Fläche ($Fe_2SiO_4$) $\leq$ Fläche ($\alpha SiO_2$) $\leq 2 \times$ Fläche ($Fe_2SiO_4$) erfüllt wird.

Das Oxidations-/Primärrekristallisationsglühen kann dabei in aus der Praxis bekannter Weise mit einem Entkohlungsglühen, bei dem der C-Gehalt des Stahlsubstrats minimiert wird, und einem ebenso optional in an sich ebenfalls bekannter Weise durchgeführten Aufstickbehandlung kombiniert werden, die eine Erhöhung des N-Gehalts des Stahlsubstrats zum Ziel hat.

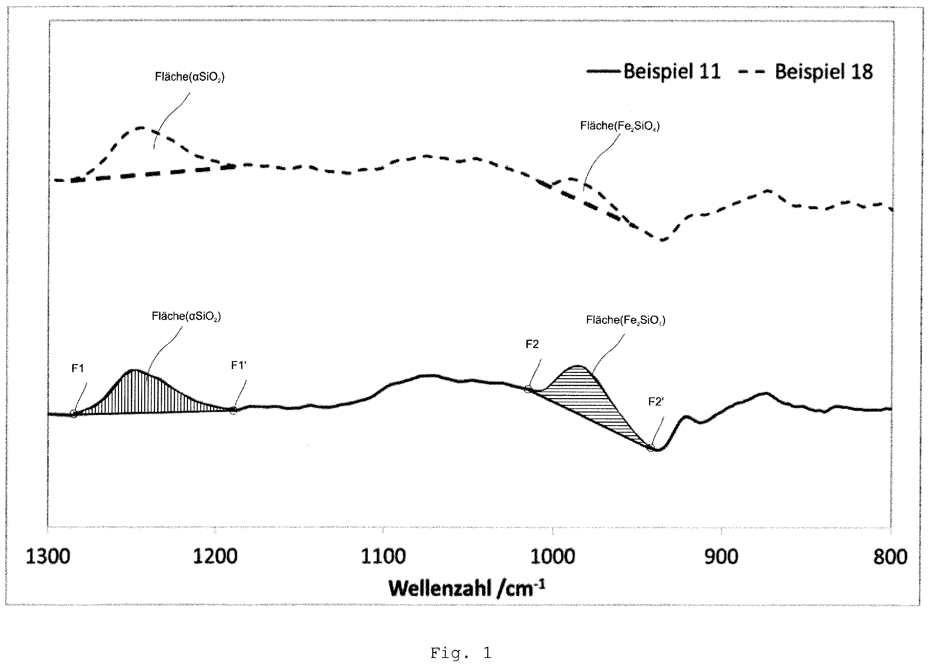

Die Fläche ($\alpha SiO_2$) und Fläche ($Fe_2SiO_4$) kann dabei für die den Anteil der $\alpha SiO_2$- und $Fe_2SiO_4$-Moleküle repräsentierenden Peaks in an sich bekannter Weise (s. Foley, "Equations for chromatographic peak modeling and calculation of peak aerea", Analytical Chemestry, Vol.- 59, August 1, 1987, Seiten 1984 - 1985) als die von dem jeweiligen Peak und seiner Basisgeraden eingeschlossene Fläche bestimmt werden, wobei Anfang und Ende der Basisgeraden durch die beiden Fußpunkte F1,F1';F2,F2' des jeweiligen Peaks, d.h. die Punkte, an denen der Verlauf des Spektrums in den jeweiligen Peak übergeht, bestimmt sind (s. Fig. 1) .

Typischerweise wird beim erfindungsgemäßen Verfahren das Kaltwalzen (Arbeitsschritt f)) in mindestens drei Kaltwalzschritten durchgeführt, wobei zwischen den Kaltwalzschritten üblicherweise in an sich bekannter Weise eine Zwischenglühung erfolgt, um die im jeweils vorangegangenen Kaltwalzschritt entstehenden Kaltverfestigungen zu beseitigen und die Walzfähigkeit für den folgenden Walzschritt zu gewährleisten. Ebenso wird bei der praktischen Umsetzung des erfindungsgemäßen Verfahrens das Warmband in ebenso bekannter Weise optional einer Warmbandglühung unterzogen werden, um eine optimale Kaltwalzbarkeit zu gewährleisten.

Die Ausprägung der Oxidschicht auf dem nach dem Kaltwalzen erhaltenen Kaltband lässt sich dann durch die im Arbeitsschritt a) erschmolzene Stahlzusammensetzung sowie die Einstellung der Parameter des optionalen Warmbandglühens, des Kaltwalzens und des Oxidations-/Primärrekristallisationsglühens unter Berücksichtigung jeweils folgender erfindungsgemäßer Maßgabe beeinflussen, wobei die betreffenden Maßnahmen in Kombination miteinander oder alternativ zueinander genutzt werden können:

- Im Fall, dass ein Warmbandglühen (Arbeitsschritt e)) durchgeführt wird, wird ein Kennwert kH nach der Formel

$$kH = T_{max} / (8 \times DP_{max} + 10 \times K)$$

mit $T_{max}$: maximale, in °C angegebene Temperatur des Warmbandglühens,
$DP_{max}$: maximal erreichter, in °C angegebener Taupunkt der Atmosphäre, unter der das Warmbandglühen stattfindet,
K: in °C/s angegebene Kühlrate bei der nach dem Warmbandglühen durchgeführten Abkühlung im Temperaturbereich von 700 - 400°C,

bestimmt.

- Es wird für das Kaltwalzen (Arbeitsschritt f)) ein Kennwert kC nach der Formel

$$kC = T_{ob}/(2 \times Ab)$$

mit $T_{ob}$: durchschnittliche, in °C angegebene Oberflächentemperatur während der letzten drei Kaltwalzstiche,

Ab: über die letzten drei Kaltwalzstiche erzielte, in % angegebene Gesamtabnahme der Dicke des Kaltbands,

bestimmt.

- Es wird für das Oxidations-/ Primärrekristallisationsglühen (Arbeitsschritt g)) ein Kennwert kOx nach der Formel

$$kOx \ = \ T_{ox} \ / \ (5 \ x \ DP_{ox})$$

mit $T_{ox}$: maximal erreichte, in °C angegebene Temperatur während des Oxidations-/ Primärrekristallisationsglühens mit optionalem Aufstickteil,

$DP_{ox}$: maximal erreichter, in °C angegebener Taupunkt der Atmosphäre, unter der das Oxidations-/ Primärrekristallisationsglühen stattfindet,

bestimmt.

Dann werden die Parameter $T_{max}$, $DP_{max}$, K, $T_{ob}$, Ab, $T_{ox}$ und $DP_{ox}$ der Arbeitsschritte a), f) g) des erfindungsgemäßen Verfahrens und die Zusammensetzung des erfindungsgemäß verarbeiteten Stahlsubstrats so eingestellt, dass die Kennwerte kH, kC und kOx die Bedingungen

$$(1) \quad \%Sn/\%Cu \ \leq \ kC \ \leq \ 3 \ x \ (\%Sn/\%Cu \ + \ \%Cr \ + \ kH)$$

$$(2) \quad 1/4 \ x \ (kH+kC+\%Sn/\%Cu) \ \leq \ kOx \ \leq \ 2 \ x \ (kH+kC+\%Sn/\%Cu+\%Cr)$$

und, sofern eine Warmbandglühung durchgeführt wird,

$$(3) \quad \gamma_{1150}/100 \ x \ 3 \ \leq \ kH \ \leq \ \gamma_{1150}/100 \ x \ 15$$

erfüllen, wobei

$$\gamma_{1150} \ = \ 694 x \%C \ - \ 23 x \%Si \ + \ 64,8$$

und mit %C der C-Gehalt der Stahlschmelze, mit %Sn der Sn-Gehalt der Stahlschmelze, mit %Cu der Cu-Gehalt der Stahlschmelze und mit %Cr der Cr-Gehalt der Stahlschmelze, jeweils angegeben in Gew.-%, bezeichnet sind.

Beim Parameter $\gamma_{1150}$ handelt es sich um die prozentuale alpha/gamma Umwandlung, die in der EP0600181 näher erläutert ist.

Überraschend hat sich gezeigt, dass eine nach Maßgabe der Erfindung erzeugte Oxidschicht die Diffusion von Stickstoff in das Stahlgrundmaterial verstärkt, wenn das erfindungsgemäß verarbeitete Stahlsubstrat einem Aufstickprozess unterzogen wird, wie er beispielsweise in der EP 0 950 120 A1 beschrieben ist.

Für die erfindungsgemäßen Zwecke eignen sich insbesondere solche konventionellen Glühseparatoren, die zum Verfahren nach einem der voranstehenden Ansprüche, die zum überwiegenden Teil, d.h. typischerweise zu mindestens 85 Gew.-%, aus MgO bestehen.

Grundsätzlich ist es denkbar, die Hochtemperaturglühung im kontinuierlichen Durchlauf auszuführen. Als besonders vorteilhaft in Bezug auf die angestrebte Optimierung der magnetischen Eigenschaften und die Praxistauglichkeit von erfindungsgemäß erzeugten Elektrobändern erweist sich jedoch ein Hochtemperaturglühen (Arbeitsschritt i)), das als Haubenglühen durchgeführt wird. Die Temperaturen des Hochtemperaturglühens liegen dabei typischerweise im an sich hierzu bekannten Temperaturbereich von 1000 - 1250 °C.

Den voranstehenden Erläuterungen entsprechend umfasst ein erfindungsgemäßes kornorientiertes Elektroband ein kaltgewalztes Stahlsubstrat, das aus einem Stahl mit (in Gew.%) 2,0 - 4,0 % Si, bis zu 0,100 % C, bis zu 0,065 % Al und bis zu 0,020 % N, sowie jeweils optional bis zu 0,5 % Cu, bis zu 0,060 % S und ebenso optional jeweils bis zu 0,3 % Cr, Mn, Ni, Mo, P, As, Sn, Sb, Se, Te, B oder Bi, Rest Eisen und unvermeidbare Verunreinigungen besteht, wobei auf dem Stahlsubstrat ein Forsteritfilm vorhanden ist, der sich dadurch auszeichnet, dass er in einem mittels diffuser Reflexions-Fourier-Transformations-Infrarot-Spektroskopie erstellten Spektrum bei der Wellenzahl 977cm$^{-1}$ ei-

nen höheren Peak aufweist als bei der Wellenzahl 984cm$^{-1}$. Ein derartiges Elektroband lässt sich insbesondere durch Anwendung des erfindungsgemäßen Verfahrens erzeugen.

Der Kohlenstoffgehalt des erfindungsgemäß beschaffenen Elektrobands beträgt typischerweise mindestens 0,01 Gew.-%, kann aber in Folge der bei seiner Herstellung durchlaufenen Prozessschritte, insbesondere bei entsprechender Durchführung der optionalen Entkohlungsglühung, auch niedriger sein.

Nachfolgend wird die Erfindung von Ausführungsbeispielen näher erläutert. Die Figuren zeigen:

Fig. 1 DRIFT-Spektren von Oxidschichten, die auf einer erfindungsgemäßen und einer nicht erfindungsgemäßen Probe vorhanden sind;

Fig. 2 DRIFT-Spektren von Forsteritfilmen, die auf einer erfindungsgemäßen und einer nicht erfindungsgemäßen Probe vorhanden sind.

Schmelzen A - F mit den in Tabelle 1 angegebenen Zusammensetzungen sind erschmolzen und zu einem Strang von 65 mm gegossen worden, von dem als Vorprodukt Dünnbrammen abgeteilt worden sind.

In 28 Versuchen sind aus den Dünnbrammen in der nachfolgend beschriebenen Weise Kaltbänder für die Herstellung von kornorientierten Elektrobändern hergestellt worden.

Nach einer Wiedererwärmung auf eine typischerweise 1170 °C betragende Wiedererwärmungstemperatur sind die Dünnbrammen zu einem Warmband mit einer Dicke von typischerweise 2,3 mm warmgewalzt worden, das dann zu einem Coil gehaspelt worden ist. Die Haspeltemperatur betrug dabei typischerweise 540 °C.

Anschließend ist das jeweilige Warmband einer Warmbandglühung unterzogen worden, bei der es jeweils bei einer maximalen Temperatur $T_{max}$ unter einer Atmosphäre mit einem maximalen Taupunkt $Dp_{max}$ durcherwärmt worden ist und nach der es jeweils mit einer Abkühlgeschwindigkeit K auf Raumtemperatur abgekühlt worden ist.

Die Warmbänder sind anschließend in fünf Stichen zu jeweils einem Kaltband kaltgewalzt worden. Dabei ist die mittlere Oberflächentemperatur $T_{ob}$ des Kaltbands während der drei letzten Stiche des Kaltwalzens und die über die letzten drei Stiche des Kaltwalzens erzielte Gesamtdickenabnahme Ab ermittelt worden.

Die nach dem Kaltwalzen erhaltenen Kaltbänder sind einer kombinierten Glühbehandlung unterzogen worden, bei der eine Entkohlung unter einer Atmosphäre mit einem maximalen Taupunkt $Dp_{dec}$ und einer maximalen Glühtemperatur $T_{dec}$, eine Oxidation-/Primärrekristallisation bei einer maximalen Glühtemperatur $T_{ox}$ und einem maximalen Taupunkt $Dp_{ox}$ sowie bei einigen ausgewählten Proben eine Nitrierbehandlung bei einer maximalen Temperatur $T_{nit}$ unter einer Atmosphäre mit einem maximalen Taupunkt $Dp_{nit}$ durchgeführt worden sind.

Auf den so erhaltenen Kaltbändern war jeweils eine Oxidschicht vorhanden, für die jeweils ein DRIFT-Spektrum erstellt worden ist.

Zusätzlich sind für die Proben die Kennwerte kH, kC und kOx sowie die Flächen "Fläche (Fe$_2$SiO$_4$)" und "Fläche ($\alpha$SiO$_2$)", die von den den Fe$_2$SiO$_4$-Molekülen und den $\alpha$SiO$_2$-Molekülen zugeordneten Peaks bei der Wellenzahl 980cm$^{-1}$ (Fe$_2$SiO$_4$-Moleküle) und 1250cm$^{-1}$ ($\alpha$SiO$_2$-Moleküle) eingenommen werden, und das Verhältnis "Fläche (Fe$_2$SiO$_4$) /Fläche ($\alpha$SiO$_2$)" bestimmt worden. Proben, bei denen das Verhältnis Fläche (Fe$_2$SiO$_4$)/Fläche ($\alpha$SiO$_2$) im Bereich von 0,5 - 2 liegt, erfüllen die Anforderungen der Erfindung.

Auf die Kaltbänder ist anschließend ein Glühseparator aufgetragen worden, der zu 90 % aus MgO bestand.

Die so beschichteten Kaltbänder sind einer als Haubenglühung durchgeführten Hochtemperaturglühung unterzogen worden, deren Maximaltemperatur 1200 °C betrug. Dabei sind die Kaltbänder zunächst in an sich bekannter Weise unter zu 75 Vol.-% aus Wasserstoff sowie 25 Vol.-% aus Stickstoff bestehenden Atmosphäre und abschließend in einer Reinigungsphase unter einer zu 100 Vol.-% aus Wasserstoff bestehenden Atmosphäre gehalten worden.

Nach dem Abkühlen war auf den Proben jeweils ein Forsteritfilm vorhanden, von dem wiederum jeweils ein DRIFT-Spektrum erstellt worden ist. In den für die 28 Proben erstellten DRIFT-Spektren des Forsteritfilms sind die Peakhöhen bei den Wellenzahlen 977cm$^{-1}$ und 984cm$^{-1}$ bestimmt und miteinander verglichen worden. Proben, bei denen die Peakhöhe bei der Wellenzahl 977cm$^{-1}$ kleiner ist als bei der Wellenzahl 984cm$^{-1}$, sind nicht erfindungsgemäß.

In den Tabellen 2 sind für die Beispiele 1 - 28 der in Tabelle 1 angegebenen Legierungen A - F, aus denen das Stahlsubstrat der jeweiligen Probe bestand, die Temperatur $T_{max}$ und der maximale Taupunkt $Dp_{max}$ der Warmbandglühung, die Abkühlgeschwindigkeit K bei der anschließenden Abkühlung, die mittlere Oberflächentemperatur $T_{ob}$ des Kaltbands während der drei letzten Stiche des Kaltwalzens und die über die letzten drei Stiche des Kaltwalzens erzielte Gesamtdickenabnahme Ab, der maximale Taupunkt $Dp_{dec}$ und die maximale Glühtemperatur $T_{dec}$ des Entkohlungsglühens, die maximale Glühtemperatur $T_{ox}$ und der maximale Taupunkt $Dp_{ox}$ des Oxidations-/ Primärrekristallisationsglühens, die maximale Temperatur $T_{nit}$ und der maximale Taupunkt $Dp_{nit}$ der optional durchgeführten Aufstickbehandlung, angegeben.

In Tabelle 3 sind für die Beispiele 1 - 28 die Kennwerte kH, kC und kOx sowie die Werte "Fläche(Fe$_2$SiO$_4$)", "Fläche($\alpha$SiO$_2$)", das Verhältnis F/$\alpha$S, d.h. das Verhältnis "Fläche (Fe$_2$SiO$_4$) "/"Fläche($\alpha$SiO$_2$)", die Peakhöhen bei den Wellenzahlen 977cm$^{-1}$ und 984cm$^{-1}$, die Differenz 977-984, d.h. der "Peakhöhe bei Wellenzahl 977cm$^{-1}$" - "Peakhöhe

bei Wellenzahl 984cm$^{-1}$" angegeben. Zusätzlich ist in Tabelle 3 hervorgehoben, welche der Beispiele 1 - 28 erfindungsgemäß sind und welche nicht.

Die über den auf den Proben 1 - 28 erhaltenen Forsteritfilm auf das jeweilige Stahlsubstrat ausgeübte Zugspannung lag bei den erfindungsgemäßen Proben typischerweise bei 6 MPa.

Sämtliche Messungen an den Proben 1 - 28 wurden mit konventionellen Messeinrichtungen vorgenommen. Für die FT-IR Messungen, die sowohl im Zustand nach dem Entkohlungsglühen als auch nach der Haubenglühung vorgenommen wurde, kam ein Bruker Tensor 27 der Bruker Corporation und für die DRIFT-Messungen eine "Praying Mantis" Zelle zum Einsatz, die von der HARRICK SCIENTIFIC PRODUCTS INC hergestellt wird.

In Fig. 1 sind die für die erfindungsgemäße Probe 11 in durchgezogener Linie und für die nicht erfindungsgemäße Probe 18 in gestrichelter Linie die vor dem Auftrag des Glühseparators vorhandene Oxidschicht ermittelten DRIFT-Spektren dargestellt.

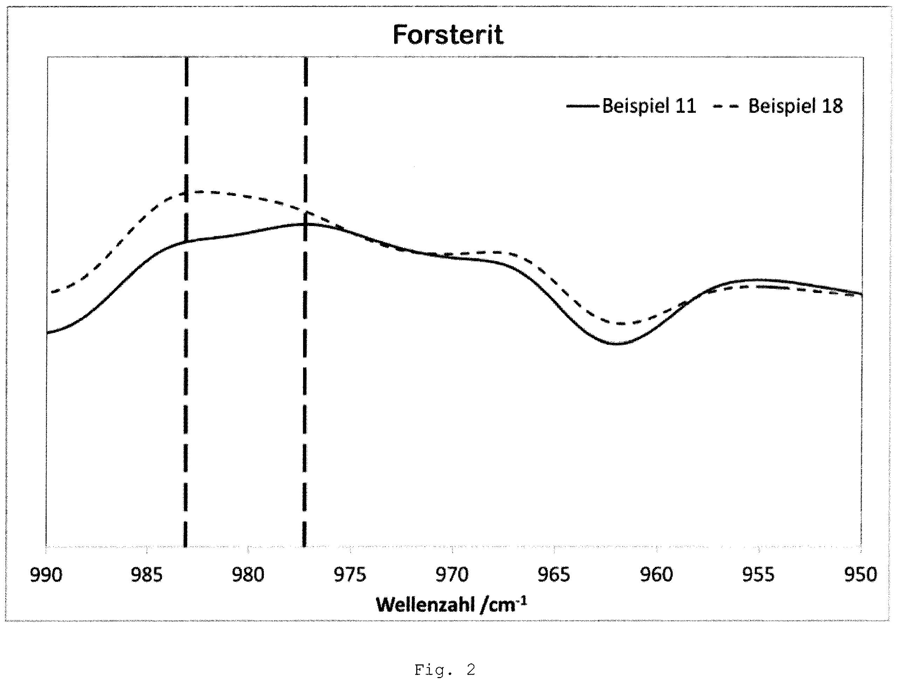

In Fig. 2 sind die für die erfindungsgemäße Probe 11 in durchgezogener Linie und für die nicht erfindungsgemäße Probe 18 in gestrichelter Linie die nach der Hochtemperaturglühung vorhandene Forsteritschicht ermittelten DRIFT-Spektren dargestellt.

Tabelle 1

| Schmelze | C | Si | Cr | Cu | Sn |
|---|---|---|---|---|---|
| A | 0,04 | 3,07 | 0,069 | 0,18 | 0,061 |
| B | 0,04 | 3,12 | 0,023 | 0,068 | 0,079 |
| C | 0,04 | 3,252 | 0,039 | 0,071 | 0,116 |
| D | 0,04 | 3,16 | 0,014 | 0,069 | 0,081 |
| E | 0,04 | 3,21 | 0,11 | 0,013 | 0,048 |
| F | 0,04 | 3,19 | 0,055 | 0,006 | 0,05 |
| Angaben in Gew.-%, Rest Fe und Verunreinigungen | | | | | |

Tabelle 2

| Probe | Schmelze | $T_{max}$ °C | $Dp_{max}$ °C | $K^1$ °C s$^{-1}$ | Ab % | $T_{ob}$ °C | $T_{dec}$ °C | $Dp_{dec}$ °C | $T_{nit}$ °C | $Dp_{nit}$ °C | $T_{ox}$ °C |
|---|---|---|---|---|---|---|---|---|---|---|---|
| 1 | A | 950 | 25 | 20 | 80 | 200 | 860 | 67 | --- | --- | 860 |
| 2 | A | 1130 | 20 | 20 | 70 | 250 | 820 | 24 | --- | --- | 820 |
| 3 | A | 1130 | 20 | 20 | 60 | 180 | 840 | 76 | 860 | 45 | 860 |
| 4 | B | 1130 | 15 | 60 | 65 | 300 | 830 | 34 | 900 | 45 | 900 |
| 5 | B | 950 | 5 | 60 | 70 | 200 | 880 | 48 | --- | --- | 880 |
| 6 | B | 1050 | 20 | 60 | 80 | 225 | 820 | 12 | 900 | 45 | 900 |
| 7 | B | 1100 | 15 | 40 | 85 | 225 | 840 | 69 | 820 | 45 | 840 |
| 8 | B | 1100 | 20 | 40 | 75 | 225 | 840 | 44 | --- | --- | 840 |
| 9 | C | 1100 | 25 | 40 | 70 | 200 | 850 | 31 | --- | --- | 850 |
| 10 | C | 950 | 20 | 20 | 73 | 225 | 820 | 22 | --- | --- | 820 |
| 11 | C | 1130 | 20 | 80 | 84 | 200 | 860 | 63 | 860 | 45 | 860 |
| 12 | C | 950 | 20 | 20 | 76 | 180 | 820 | 48 | 900 | 45 | 900 |
| 13 | D | 950 | 15 | 20 | 83 | 250 | 860 | 34 | --- | --- | 860 |
| 14 | E | 1130 | 25 | 60 | 85 | 200 | 830 | 36 | 800 | 45 | 830 |
| 15 | A | 950 | 20 | 40 | 75 | 230 | 860 | 15 | --- | --- | 860 |
| 16 | F | 950 | 5 | 60 | 70 | 200 | 880 | 48 | --- | --- | 880 |
| 17 | E | 950 | 20 | 50 | 84 | 190 | 860 | 35 | 860 | 45 | 860 |

(fortgesetzt)

| Probe | Schmelze | $T_{max}$ °C | $Dp_{max}$ °C | $K^1$ °C s$^{-1}$ | Ab % | $T_{ob}$ °C | $T_{dec}$ °C | $Dp_{dec}$ °C | $T_{nit}$ °C | $Dp_{nit}$ °C | $T_{ox}$ °C |
|---|---|---|---|---|---|---|---|---|---|---|---|
| 18 | E | 1050 | 40 | 60 | 67 | 150 | 850 | 64 | --- | --- | 850 |
| 19 | F | 1050 | 40 | 70 | 87 | 220 | 860 | 78 | --- | --- | 860 |
| 20 | A | 1050 | 5 | 20 | 80 | 200 | 870 | 22 | --- | --- | 870 |
| 21 | C | 1100 | 5 | 30 | 77 | 230 | 830 | 40 | 900 | 45 | 900 |
| 22 | F | 1100 | 15 | 50 | 70 | 250 | 810 | 64 | 820 | 45 | 820 |
| 23 | A | 1100 | 20 | 60 | 75 | 300 | 850 | 20 | --- | --- | 850 |
| 24 | F | 1100 | 15 | 50 | 70 | 180 | 830 | 29 | 920 | 45 | 920 |
| 25 | F | 1100 | 40 | 40 | 75 | 190 | 820 | 35 | 770 | -5 | 820 |
| 26 | C | 1100 | 20 | 20 | 65 | 200 | 860 | 48 | --- | --- | 860 |
| 27 | F | 950 | 20 | 40 | 74 | 180 | 830 | 64 | 820 | 45 | 830 |
| 28 | C | 1130 | 20 | 20 | 73 | 240 | 880 | 16 | 900 | 45 | 900 |

Tabelle 3

| Probe | $Dp_{ox}$ °C | kH | kC | kOx | Fläche $\alpha SiO_2$ | Fläche $Fe_2SiO_4$ | F/$\alpha$S | Peakhöhe 984 | Peakhöhe 977 | Differenz 977-984 | *) |
|---|---|---|---|---|---|---|---|---|---|---|---|
| 1 | 67 | 2,38 | 3,75 | 2,57 | 0,169 | 0,233 | 1,378 | 0,364 | 0,492 | 0,127 | J |
| 2 | 24 | 3,14 | 5,36 | 6,83 | 0,02 | 0,039 | 1,998 | 0,244 | 0,26 | 0,016 | J |
| 3 | 76 | 3,14 | 4,50 | 2,26 | 0,134 | 0,19 | 1,419 | 0,371 | 0,462 | 0,09 | J |
| 4 | 45 | 1,57 | 6,92 | 4,00 | 0,064 | 0,117 | 1,826 | 0,336 | 0,492 | 0,156 | J |
| 5 | 48 | 1,48 | 4,29 | 3,67 | 0,029 | 0,047 | 1,644 | 0,365 | 0,369 | 0,004 | J |
| 6 | 45 | 1,38 | 4,22 | 4,00 | 0,061 | 0,052 | 0,865 | 0,278 | 0,308 | 0,029 | J |
| 7 | 69 | 2,12 | 3,97 | 2,43 | 0,062 | 0,055 | 0,896 | 0,319 | 0,474 | 0,155 | J |
| 8 | 44 | 1,96 | 4,50 | 3,82 | 0,049 | 0,097 | 1,983 | 0,34 | 0,469 | 0,129 | J |
| 9 | 31 | 1,83 | 4,29 | 5,48 | 0,041 | 0,055 | 1,352 | 0,355 | 0,55 | 0,195 | J |
| 10 | 22 | 2,64 | 4,62 | 7,45 | 0,012 | 0,007 | 0,585 | 0,214 | 0,388 | 0,174 | J |
| 11 | 63 | 1,18 | 3,57 | 2,73 | 0,142 | 0,112 | 0,789 | 0,38 | 0,388 | 0,008 | J |
| 12 | 48 | 2,64 | 3,55 | 3,75 | 0,159 | 0,09 | 0,567 | 0,379 | 0,395 | 0,016 | J |
| 13 | 34 | 2,97 | 4,52 | 5,06 | 0,035 | 0,055 | 1,578 | 0,233 | 0,249 | 0,017 | J |
| 14 | 45 | 1,41 | 3,53 | 3,69 | 0,124 | 0,241 | 1,947 | 0,304 | 0,396 | 0,092 | J |
| 15 | 15 | 1,70 | 4,60 | 11,47 | 0,084 | 0,003 | 0,038 | 0,328 | 0,314 | -0,014 | N |
| 16 | 48 | 1,48 | 4,29 | 3,67 | 0,05 | 0,013 | 0,25 | 0,304 | 0,234 | -0,07 | N |
| 17 | 45 | 1,44 | 3,39 | 3,82 | 0,087 | 0,007 | 0,082 | 0,208 | 0,15 | -0,058 | N |
| 18 | 64 | 1,14 | 3,36 | 2,66 | 0,154 | 0,051 | 0,331 | 0,381 | 0,377 | -0,004 | N |
| 19 | 78 | 1,03 | 3,79 | 2,21 | 0,091 | 0,033 | 0,36 | 0,282 | 0,225 | -0,057 | N |
| 20 | 22 | 4,38 | 3,75 | 7,91 | 0,093 | 0,029 | 0,314 | 0,339 | 0,157 | -0,182 | N |
| 21 | 45 | 3,24 | 4,48 | 4,00 | 0,006 | 0,016 | 2,575 | 0,365 | 0,178 | -0,187 | N |
| 22 | 64 | 1,77 | 5,36 | 2,56 | 0,188 | 0,463 | 2,457 | 0,33 | 0,23 | -0,1 | N |
| 23 | 20 | 1,45 | 6,00 | 8,50 | 0,136 | 0,329 | 2,415 | 0,228 | 0,217 | -0,011 | N |
| 24 | 45 | 1,77 | 3,86 | 4,09 | 0,113 | 0,246 | 2,176 | 0,385 | 0,382 | -0,003 | N |
| 25 | 35 | 1,53 | 3,80 | 4,69 | 0,082 | 0,235 | 2,856 | 0,396 | 0,375 | -0,021 | N |

(fortgesetzt)

| Probe | $Dp_{ox}$ °C | kH | kC | kOx | Fläche $\alpha SiO_2$ | Fläche $Fe_2SiO_4$ | $F/\alpha S$ | Peakhöhe 984 | Peakhöhe 977 | Differenz 977-984 | *) |
|---|---|---|---|---|---|---|---|---|---|---|---|
| 26 | 48 | 3,06 | 4,62 | 3,58 | 0,063 | 0,18 | 2,857 | 0,297 | 0,177 | -0,12 | N |
| 27 | 64 | 1,70 | 3,65 | 2,59 | 0,05 | 0,143 | 2,835 | 0,314 | 0,145 | -0,169 | N |
| 28 | 45 | 3,14 | 4,93 | 4,00 | 0,05 | 0,102 | 2,024 | 0,281 | 0,265 | -0,016 | N |
| *) Erfindungsgemäß? (J = JA; N = Nein) | | | | | | | | | | | |

**Patentansprüche**

1. Verfahren zum Herstellen eines kornorientierten Elektrobands umfassend folgende Arbeitsschritte:

   a) Erschmelzen einer Stahlschmelze, die aus (in Gew.%) 2,0 - 4,0 % Si, 0,010 - 0,100 % C, bis zu 0,065 % Al und bis zu 0,02 % N, sowie jeweils optional bis zu 0,5 % Cu, bis zu 0,060 % S und ebenso optional jeweils bis zu 0,3 % Cr, Mn, Ni, Mo, P, As, Sn, Sb, Se, Te, B oder Bi, Rest Eisen und unvermeidbaren Verunreinigungen besteht;
   b) Vergießen der Stahlschmelze zu einem Vormaterial, wie einer Bramme, Dünnbramme oder einem gegossenen Band;
   c) Warmwalzen des Vormaterials zu einem Warmband;
   d) Haspeln des Warmbands zu einem Coil;
   e) optionales Glühen des Warmbands;
   f) Kaltwalzen des Warmbands in einem oder mehreren Kaltwalzschritten zu einem Kaltband;
   g) Oxidations-/Primärrekristallisationsglühen des Kaltbands, wobei dieser Arbeitsschritt jeweils optional eine Entkohlungs- und/oder Aufstickbehandlung umfasst und wobei das Kaltband nach dem Oxidations-/Primärrekristallisationsglühen auf seiner Oberfläche eine Oxidschicht aufweist;
   h) Auftrag einer Glühseparatorschicht auf die die Oxidschicht aufweisende Oberfläche des Kaltbands;
   i) Hochtemperaturglühen des mit dem Glühseparator beschichteten Kaltbands unter Ausbildung einer Forsteritschicht auf der Oberfläche des geglühten Kaltbands;
   j) Auftrag einer Isolierschicht auf die die Forsteritschicht aufweisende Oberfläche des Kaltbands;
   k) Schlussglühen des Kaltbands;
   l) optionales Laserbehandeln des Kaltbands;

   **dadurch gekennzeichnet,**

   - **dass** nach dem Arbeitsschritt g) mittels diffuser Reflexions-Fourier-Transformations-Infrarot-Spektroskopie ein Spektrum der an der Oberfläche des Kaltbands vorhandenen Oxidschicht erstellt wird,
   - **dass** für den bei 980 $cm^{-1}$ in dem erhaltenen Spektrum vorhandenen Peak, der die in der Oxidschicht anwesenden $Fe_2SiO_4$-Moleküle repräsentiert, die Fläche "Fläche($Fe_2SiO_4$)" durch Integration bestimmt wird,
   - **dass** für den bei 1250 $cm^{-1}$ in dem erhaltenen Spektrum vorhandenen Peak, der die in der Oxidschicht anwesenden $\alpha SiO_2$-Moleküle repräsentiert, die Fläche "Fläche($\alpha SiO_2$)" durch Integration bestimmt wird

   und

   - **dass** die Zusammensetzung des Stahls (Arbeitsschritt a)), des Kaltwalzens (Arbeitsschritt f)) oder des Oxidations-/ Primärrekristallisationsglühens (Arbeitsschritt g)) oder die Parameter der optional durchgeführten Warmbandglühung (Arbeitsschritt e)) derart eingestellt werden, dass die Fläche($\alpha SiO_2$) und die Fläche ($Fe_2SiO_4$) die Bedingung
   0,5xFläche ($Fe_2SiO_4$) $\leq$ Fläche ($\alpha SiO_2$) $\leq$ 2xFläche ($Fe_2SiO_4$) erfüllen.

2. Verfahren nach Anspruch 1, **dadurch gekennzeichnet, dass** das Kaltwalzen (Arbeitsschritt f)) in mindestens drei Kaltwalzschritten durchgeführt wird.

3. Verfahren nach Anspruch 1 oder 2, **dadurch gekennzeichnet, dass** das Warmband notwendig einer Warmbandglühung unterzogen wird.

4. Verfahren nach Anspruch 2 und 3, **dadurch gekennzeichnet, dass**

   - für das Kaltwalzen (Arbeitsschritt f)) ein Kennwert kC nach der Formel

   $$kC = T_{ob}/(2 \times Ab)$$

   mit $T_{ob}$: durchschnittliche, in °C angegebene Oberflächentemperatur während der letzten drei Kaltwalzstiche,

Ab: über die letzten drei Kaltwalzstiche erzielte, in % angegebene Gesamtabnahme der Dicke des Kaltbands,

- für das Oxidations-/Primärrekristallisationsglühen (Arbeitsschritt g)) ein Kennwert kOx nach der Formel

$$kOx \; = \; T_{ox} \; / \; (5 \; x \; DP_{ox})$$

mit $T_{ox}$: maximal erreichte, in °C angegebene Temperatur während des Oxidations-/ Primärrekristallisationsglühens mit optionalem Aufstickteil,
$DP_{ox}$: maximal erreichter, in °C angegebener Taupunkt der Atmosphäre, unter der das Oxidations-/Primärrekristallisationsglühen stattfindet,

und im Fall, dass ein Warmbandglühen (Arbeitsschritt e)) durchgeführt wird,

- für das Warmbandglühen ein Kennwert kH nach der Formel

$$kH \; = \; T_{max} \; / \; (8 \; x \; DP_{max} \; + \; 10 \; x \; K)$$

mit $T_{max}$: maximale, in °C angegebene Temperatur des Warmbandglühens,
$DP_{max}$: maximal erreichter, in °C angegebener Taupunkt der Atmosphäre, unter der das Warmbandglühen stattfindet,
K: in °C/s angegebene Kühlrate bei der nach dem Warmbandglühen durchgeführten Abkühlung im Temperaturbereich von 700 - 400 °C,

bestimmt werden, und die Parameter $T_{max}$, $DP_{max}$, K, $T_{ob}$, Ab, $T_{ox}$ und $DP_{ox}$ derart eingestellt werden, dass die Kennwerte kH, kC und kOx die Bedingungen

$$(1) \quad \%Sn/\%Cu \; \leq \; kC \; \leq \; 3 \; x \; (\%Sn/\%Cu \; + \; \%Cr \; + \; kH)$$

$$(2) \; 1/4 \; x \; (kH+kC+\%Sn/\%Cu) \; \leq \; kOx \; \leq \; 2 \; x \; (kH+kC+\%Sn/\%Cu+\%Cr)$$

und, sofern eine Warmbandglühung (Arbeitsschritt e)) durchgeführt wird,

$$(3) \; \gamma_{1150}/100 \; x \; 3 \; \leq \; kH \; \leq \; \gamma_{1150}/100 \; x \; 15$$

erfüllt, wobei

$$\gamma_{1150} \; = \; 694x\%C \; - \; 23x\%Si \; + \; 64,8$$

und mit %C der C-Gehalt der Stahlschmelze, mit %Sn der Sn-Gehalt der Stahlschmelze, mit %Cu der Cu-Gehalt der Stahlschmelze und mit %Cr der Cr-Gehalt der Stahlschmelze, jeweils angegeben in Gew.-%, bezeichnet sind.

5. Verfahren nach einem der voranstehenden Ansprüche,
   **dadurch gekennzeichnet, dass** der im Arbeitsschritt h) aufgetragene Glühseparator zum überwiegenden Teil aus MgO besteht.

6. Verfahren nach einem der voranstehenden Ansprüche,
   **dadurch gekennzeichnet, dass** das Hochtemperaturglühen (Arbeitsschritt i)) als Haubenglühen durchgeführt wird.

7. Verfahren nach Anspruch 6, **dadurch gekennzeichnet, dass** die Temperatur beim Hochtemperaturglühen mehr als 1150 °C beträgt.

**8.** Kornorientiertes Elektroband, bei dem auf einem kaltgewalzten Stahlsubstrat, das aus einem Stahl mit (in Gew.%) 2,0 - 4,0 % Si, bis zu 0,100 % C, bis zu 0,065 % Al und bis zu 0,020 % N, sowie jeweils optional bis zu 0,5 % Cu, bis zu 0,060 % S und ebenso optional jeweils bis zu 0,3 % Cr, Mn, Ni, Mo, P, As, Sn, Sb, Se, Te, B oder Bi, Rest Eisen und unvermeidbare Verunreinigungen besteht, ein Forsteritfilm vorhanden ist, der sich dadurch auszeichnet, dass er in einem mittels diffuser Reflexions-Fourier-Transformations-Infrarot-Spektroskopie erstellten Spektrum bei der Wellenzahl 977cm$^{-1}$ einen höheren Peak aufweist als bei der Wellenzahl 984cm$^{-1}$.

**9.** Kornorientiertes Elektroband nach Anspruch 8,
**dadurch gekennzeichnet, dass** sein C-Gehalt mindestens 0,010 Gew.-% beträgt.

**10.** Kornorientiertes Elektroband nach Anspruch 8 oder 9,
**dadurch gekennzeichnet, dass** es durch Anwendung eines gemäß einem der Ansprüche 1 bis 7 ausgebildeten Verfahrens hergestellt ist.

**Claims**

**1.** A method of producing a grain-oriented electrical steel strip comprising the following steps:

a) smelting a steel melt consisting of (in % by weight) 2.0-4.0% Si, 0.010-0.100% C, up to 0.065% Al and up to 0.02% N, and in each case optionally up to 0.5% Cu, up to 0.060% S and likewise optionally in each case up to 0.3% Cr, Mn, Ni, Mo, P, As, Sn, Sb, Se, Te, B or Bi, the balance being iron and unavoidable impurities;
b) casting the steel melt to give a preliminary material, such as a slab, thin slab or a cast strip;
c) hot rolling the preliminary material to give a hot strip;
d) coiling the hot strip to give a coil;
e) optionally annealing the hot strip;
f) cold rolling the hot strip in one or more cold rolling steps to give a cold strip;
g) oxidation/primary recrystallization annealing of the cold strip, where this step in each case optionally comprises a decarburizing and/or nitriding treatment and where the cold strip after the oxidation/primary recrystallization anneal has an oxide layer on its surface;
h) applying an annealing separator layer to the surface of the cold strip having the oxide layer;
i) high-temperature annealing of the cold strip coated with the annealing separator to form a forsterite layer on the surface of the calcined cold strip;
j) applying an insulation layer to the surface of the cold strip having the forsterite layer;
k) finally annealing the cold strip;
l) optionally laser-treating the cold strip;

**characterized in that**

- a spectrum of the oxide layer present on the surface of the cold strip is recorded after step g) by means of diffuse reflectance Fourier transformation infrared spectroscopy,
- the area "area ($Fe_2SiO_4$) " is determined by integration for the peak present in the spectrum obtained at 980 cm$^{-1}$, which represents the $Fe_2SiO_4$ molecules present in the oxide layer,
- the area "area($\alpha SiO_2$)" is determined by integration for the peak present in the spectrum obtained at 1250 cm$^{-1}$, which represents the $\alpha SiO_2$ molecules present in the oxide layer

and
the composition of the steel (step a)), of the cold rolling (step f)) or of the oxidation/primary recrystallization anneal (step g)) or the parameters for the optionally conducted hot strip anneal (step e)) are adjusted such that the area ($\alpha SiO_2$) and the area ($Fe_2SiO_4$) satisfy the condition
$0.5 \times$ area ($Fe_2SiO_4$) $\leq$ area ($\alpha SiO_2$) $\leq 2 \times$ area ($Fe_2SiO_4$).

**2.** The method as claimed in claim 1,
**characterized in that** the cold rolling (step f)) is conducted in at least three cold rolling steps.

**3.** The method as claimed in claim 1 or 2,
**characterized in that** the hot strip is necessarily subjected to a hot strip anneal.

4. The method as claimed in claim 2 or 3,
**characterized in that**

- for the cold rolling (step f)) an index kC is determined by the formula

$$kC = T_{ob} / (2 \times Ab)$$

with $T_{ob}$: average surface temperature, reported in °C, during the last three cold rolling passes,
Ab: total decrease in the thickness of the cold strip, reported in %, achieved over the last three cold rolling passes,

- for the oxidation/primary recrystallization anneal (step g)) an index kOx is determined by the formula

$$kOx = T_{ox} / (5 \times DP_{ox})$$

with $T_{ox}$: maximum temperature, reported in °C, achieved during the oxidation/primary recrystallization anneal with optional nitriding component,
$DP_{ox}$: maximum dew point, reported in °C, achieved in the atmosphere under which the oxidation/primary recrystallization anneal takes place,

and, if a hot strip anneal (step e)) is conducted,

- for the hot strip anneal an index kH is determined by the formula

$$kH = T_{max} / (8 \times DP_{max} + 10 \times K)$$

with $T_{max}$: maximum temperature, reported in °C, in the hot strip anneal,
$DP_{max}$: maximum dew point, reported in °C, achieved in the atmosphere under which the hot strip anneal takes place,
K: cooling rate, reported in °C/s, in the cooling within the temperature range of 700-400°C conducted after the hot strip anneal,

and the parameters $T_{max}$, $DP_{max}$, K, $T_{ob}$, Ab, $T_{ox}$ and $DP_{ox}$ are adjusted such that the indices kH, kC and kOx satisfy the conditions

$$(1) \quad \%Sn/\%Cu \leq kC \leq 3 \times (\%Sn/\%Cu + \%Cr + kH)$$

$$(2) \quad 1/4 \times (kH+kC+\%Sn/\%Cu) \leq kOx \leq 2 \times (kH+kC+\%Sn/\%Cu+\%Cr)$$

and, if a hot strip anneal (step e)) is conducted,

$$(3) \quad \gamma_{1150}/100 \times 3 \leq kH \leq \gamma_{1150}/100 \times 15$$

where

$$\gamma_{1150} = 694 \times \%C - 23 \times \%Si + 64.8$$

and with %C the carbon content of the steel melt, with %Sn the Sn content of the steel melt, with %Cu the copper content of the steel melt and with %Cr the chromium content of the steel melt, each reported in % by weight.

**5.** The method as claimed in any of the preceding claims,
**characterized in that** the annealing separator applied in step h) consists predominantly of MgO.

**6.** The method as claimed in any of the preceding claims,
**characterized in that** the high-temperature anneal (step i)) is conducted as a bell anneal.

**7.** The method as claimed in claim 6,
**characterized in that** the temperature in the high-temperature anneal is more than 1150°C.

**8.** A grain-oriented electrical steel strip in which there is a forsterite film present on a cold-rolled steel substrate consisting of a steel consisting of (in % by weight) 2.0-4.0% Si, up to 0.100% C, up to 0.065% Al and up to 0.020% N, and in each case optionally up to 0.5% Cu, up to 0.060% S and likewise optionally in each case up to 0.3% Cr, Mn, Ni, Mo, P, As, Sn, Sb, Se, Te, B or Bi, the balance being iron and unavoidable impurities, it being a feature of said forsterite film that it has a higher peak at the wavenumber of 977 cm$^{-1}$ than at the wavenumber of 984 cm$^{-1}$ in a spectrum recorded by means of diffuse reflectance Fourier transformation infrared spectroscopy.

**9.** The grain-oriented electrical steel strip as claimed in claim 8, **characterized in that** the carbon content thereof is at least 0.010% by weight.

**10.** The grain-oriented electrical steel strip as claimed in claim 8 or 9, **characterized in that** it has been produced by employing a method as per any of claims 1 to 7.


**Revendications**

**1.** Procédé de fabrication d'une tôle magnétique à grains orientés, comprenant les étapes suivantes :

a) mise en fusion d'un acier liquide, qui se compose de (en % massiques) 2,0 - 4,0 % de Si, 0,010 - 0,100 % de C, jusqu'à 0,065 % d'Al et jusqu'à 0,02 % de N, ainsi que respectivement en option jusqu'à 0,5 % de Cu, jusqu'à 0,060 % de S et aussi en option respectivement jusqu'à 0,3 % de Cr, de Mn, de Ni, de Mo, de P, d'As, de Sn, de Sb, de Se, de Te, de B ou de Bi, le reste étant du fer et les inévitables impuretés ;
b) coulage de l'acier liquide en un produit primaire, comme une brame, une brame mince ou un feuillard brut de coulée ;
c) laminage à chaud du produit primaire en un feuillard laminé à chaud ;
d) bobinage du feuillard laminé à chaud en une bobine de feuillard ;
e) en option, recuit du feuillard laminé à chaud ;
f) laminage à froid du feuillard laminé à chaud en une ou plusieurs étapes de laminage à froid pour obtenir un feuillard laminé à froid ;
g) recuit d'oxydation / de recristallisation primaire du feuillard laminé à froid, cette étape comprenant respectivement, en option, un traitement de décarburation et/ou de nitruration et le feuillard laminé à froid possédant une couche d'oxyde sur sa surface après le recuit d'oxydation / de recristallisation primaire ;
h) application d'une couche de séparateur de recuit sur la surface du feuillard laminé à froid qui possède la couche d'oxyde ;
i) recuit à haute température du feuillard laminé à froid enduit du séparateur de recuit en formant une couche de fostérite sur la surface du feuillard laminé à froid recuit ;
j) application d'une couche isolante sur la surface du feuillard laminé à froid qui possède la couche de fostérite ;
k) recuit final du feuillard laminé à froid ;
l) en option, traitement au laser du feuillard laminé à froid ;
**caractérisé en ce**

- **qu'**après l'étape g), un spectre de la couche d'oxyde présente sur la surface du feuillard laminé à froid est créé par spectroscopie infrarouge à transformée de Fourier en réflexion diffuse,
- **que** pour le pic présent à 980 cm$^{-1}$ dans le spectre obtenu, lequel représente les molécules de Fe$_2$SiO$_4$ présentes dans la couche d'oxyde, la surface « surface(Fe$_2$SiO$_4$) » est déterminée par intégration,
- **que** pour le pic présent à 1250 cm$^{-1}$ dans le spectre obtenu, lequel représente les molécules de $\alpha$SiO$_2$ présentes dans la couche d'oxyde, la surface « surface($\alpha$SiO$_2$) » est déterminée par intégration, et
- **que** la composition de l'acier (étape a)), le laminage à froid (étape f)) ou le recuit d'oxydation / de recristallisation primaire (étape g)) ou les paramètres du recuit du feuillard laminé à chaud effectué en option (étape e)) sont réglés de telle sorte que la surface ($\alpha$SiO$_2$) et la surface(Fe$_2$SiO$_4$) satisfont la condition 0,5 x surface (Fe$_2$SiO$_4$) $\leq$ surface ($\alpha$SiO$_2$) $\leq$ 2 x surface (Fe$_2$SiO$_4$).

2. Procédé selon la revendication 1, **caractérisé en ce que** le laminage à froid (étape f)) est effectué en au moins trois étapes de laminage à froid.

3. Procédé selon la revendication 1 ou 2, **caractérisé en ce que** le feuillard laminé à chaud est nécessairement soumis à un recuit de feuillard laminé à chaud.

4. Procédé selon les revendications 2 et 3, **caractérisé en ce que**

  - pour le laminage à froid (étape f)), une valeur caractéristique kC selon la formule

$$kC = T_{ob} / (2 \times Ab)$$

  où $T_{ob}$ désigne la température de surface moyenne, indiquée en °C, pendant les trois dernières coulées de laminage à froid,
  Ab désigne la diminution totale, indiquée en %, de l'épaisseur du feuillard laminé à froid obtenue sur les trois dernières coulées de laminage à froid,

  - pour le recuit d'oxydation / de recristallisation primaire (étape g)), une valeur caractéristique kOx selon la formule

$$kOx = T_{ox} / (5 \times DP_{ox})$$

  où $T_{ox}$ désigne la température maximale atteinte, indiquée en °C, pendant le recuit d'oxydation / de recristallisation primaire avec la partie de nitruration optionnelle,
  $DP_{ox}$ désigne le point de rosée maximal atteint, indiqué en °C, de l'atmosphère sous laquelle a lieu le recuit d'oxydation / de recristallisation primaire,
  et dans le cas où un recuit du feuillard laminé à chaud (étape e)) est effectué,

  - pour le recuit du feuillard laminé à chaud, une valeur caractéristique kH selon la formule

$$kH = T_{max} / (8 \times DP_{max} + 10 \times K)$$

  où $T_{max}$ désigne la température maximale, indiquée en °C, du recuit du feuillard laminé à chaud,
  $DP_{max}$ désigne le point de rosée maximal atteint, indiqué en °C, de l'atmosphère sous laquelle a lieu le recuit du feuillard laminé à chaud,
  K désigne le taux de refroidissement, indiqué en °C/s, lors du refroidissement dans la plage de températures de 700 à 400 °C qui est effectué après le recuit du feuillard laminé à chaud,
  sont déterminées, et les paramètres $T_{max}$, $DP_{max}$, K, $T_{ob}$, Ab, $T_{ox}$ et $DP_{ox}$ sont réglés de telle sorte que les valeurs caractéristiques kH, kC et kOx satisfont les conditions

$$(1) \quad \%Sn/\%Cu \leq kC \leq (\%Sn/\%Cu + \%Cr + kH)$$

$$(2) \quad 1/4 \times (kH + kC + \%Sn/\%Cu) \leq kOx \leq 2 \times (kH + kC + \%Sn/\%Cu + \%Cr)$$

  et, sous réserve qu'un recuit du feuillard laminé à chaud (étape e)) est effectué,

$$(3) \quad \gamma_{1150}/100 \times 3 \leq kH \leq \gamma_{1150}/100 \times 15$$

où

$\gamma_{1150}$ = 694x%C - 23x%Si + 64,8

et %C désignant la teneur en C de l'acier liquide, %Sn la teneur en Sn de l'acier liquide, %Cu la teneur en Cu de l'acier liquide et %Cr la teneur en Cr de l'acier liquide, respectivement indiquées en % massiques.

5. Procédé selon l'une des revendications précédentes, **caractérisé en ce que** le séparateur de recuit appliqué à l'étape h) se compose en majeure partie de MgO.

6. Procédé selon l'une des revendications précédentes, **caractérisé en ce que** le recuit à haute température (étape i)) est réalisé sous la forme d'un recuit sous cloche.

7. Procédé selon la revendication 6, **caractérisé en ce que** la température du recuit à haute température est supérieure à 1150 °C.

8. Tôle magnétique à grains orientés, pour laquelle, sur un substrat en acier laminé à froid qui se compose d'un acier comprenant (en % massiques) 2,0 - 4,0 % de Si, jusqu'à 0,100 % de C, jusqu'à 0,065 % d'Al et jusqu'à 0,020 % de N, ainsi que respectivement en option jusqu'à 0,5 % de Cu, jusqu'à 0,060 % de S et aussi en option respectivement jusqu'à 0,3 % de Cr, de Mn, de Ni, de Mo, de P, d'As, de Sn, de Sb, de Se, de Te, de B ou de Bi, le reste étant du fer et les inévitables impuretés, se trouve un film de fostérite qui se **caractérise en ce que** dans un spectre créé par spectroscopie infrarouge à transformée de Fourier en réflexion diffuse, il présente une crête plus élevée au nombre d'ondes de 977 cm$^{-1}$ qu'au nombre d'ondes de 984 cm$^{-1}$.

9. Tôle magnétique à grains orientés selon la revendication 8, **caractérisée en ce que** sa teneur en C est au minimum de 0,010 % massique.

10. Tôle magnétique à grains orientés selon la revendication 8 ou 9, **caractérisée en ce qu'**elle est fabriquée en utilisant un procédé conçu selon l'une des revendications 1 à 7.

Fig. 1

EP 3 341 500 B1

Fig. 2

**EP 3 341 500 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1025268 B1
- WO 03000951 A1
- EP 0409389 A2
- EP 0008385 B1
- EP 0100638 B1
- EP 0571705 A2
- EP 0539236 B1
- EP 0225619 B1
- WO 9525820 A1
- JP 2004191217 A
- JP 2005069917 B
- EP 0600181 A
- EP 0950120 A1

**In der Beschreibung aufgeführte Nicht-Patentliteratur**

- **JUNG et al.** Rapid quantitative analysis of fayalite and silica formed during decarburization of electrical steel. *Surface Interface Analysis,* 2012, vol. 44, 270-275
- **JUNG et al.** Characterization of chemical information and morphology for in-depth oxide layers in decarburized electrical steel with glow discharge sputtering. *Surface Interface Analysis,* 2013, vol. 45, 1119-1128
- **S. BEASLEY et al.** Comparision of transmission FT-IR, ATR and DRIFT sprecta. *Journal of Archeological Sience,* vol. 46, 16-22
- **S. FOLEY.** Equations for chromatographic peak modeling and calculation of peak aerea. *Analytical Chemestry,* 01. August 1987, vol. 59, 1984-1985